# EUROPÄISCHE PATENTSCHRIFT

(11) **EP 0 358 033 B1**
(45) Veröffentlichungstag und Bekanntmachung des Hinweises auf die Patenterteilung: **08.06.1994**
(21) Anmeldenummer: 89115432.0
(22) Anmeldetag: 22.08.1989
(51) Int. Cl.: C08F 4/00, C09D 157/00

(54) **Neue radikalisch polymerisierbare Mehrstoffgemische und ihre Verwendung (II)**
Radical polymerizable compositions and their use
Compositions polymérisables par radicaux et leur utilisation

(30) Priorität: 31.08.1988 DE 3829461
(43) Veröffentlichungstag der Anmeldung: 14.03.1990
(73) Patentinhaber: Henkel Kommanditgesellschaft auf Aktien, 40191 Düsseldorf (DE)
(72) Erfinder: Huver, Thomas, Dr., D-4000 Düsseldorf 12 (DE); Fischer, Herbert, Dr., D-4000 Düsseldorf 13 (DE); Emmerling, Winfried, Dr., D-4000 Erkrath 2 (DE)

(56) Entgegenhaltungen:
- FR-A- 1 242 899
- DIE MAKROMOLEKULARE CHEMIE, Band 93, 1966, Basel (CH); L. HORNER et al.: 'Autoxydationsstudien an N,N-dialkylierten Anilinderivaten'

## Beschreibung

Die Erfindung betrifft neue formgebend verarbeitbare radikalisch polymerisierbare Mehrstoffgemische, die beispielsweise als fließ-bzw. streichfähige oder als pastöse Massen zum Einsatz kommen und dann unter Umgebungsbedingungen und Auslösung der Polymerisationsreaktion aushärten. Anwendungstechnisch gesehen betrifft die Erfindung dabei nahezu alle Gebiete des Einsatzes radikalisch polymerisierbarer bzw. härtbarer Massen. Beispielhaft seien erwähnt Klebstoffe, Dichtungsmassen, der gezielte Aufbau von Kunststofformteilen, die Oberflächenbeschichtung mit lufthärtenden insbesondere lösungsmittelfreien Lacksystemen und dergleichen.

Die Peroxid- bzw. Hydroperoxid-initiierte Härtung olefinisch ungesättigter Systeme bedarf insbesondere dann aus mehreren Komponenten zusammengesetzter Aktivatorsysteme, wenn die Reaktionsauslösung bei niederen Temperaturen beispielsweise bei Raumtemperatur oder nur schwach erhöhten Temperaturen erfolgen soll. Bekannt ist, daß ausgewählten tertiären Aminverbindungen mit partieller aromatischer Substitution am N-Atom eine solche Aktivatorfunktion zukommt. Bekannte Aktivatoren für die Polymerisationsauslösung beispielsweise mittels Dibenzoylperoxid sind insbesondere Dimethylanilin und Dimethyl-p-Toluidin.

Eine ganz andere bekannte Aktivatorklasse für die oxidative Polymerisationsauslösung bestimmter ungesättigter Systeme, nämlich trocknender Öle, sind im System wenigstens anteilsweise lösliche Metallverbindungen solcher Metalle, die mit mehreren Wertigkeitsstufen auftreten können und über intermediär auftretende Wertigkeitsverschiebungen bei Interaktion mit weiteren Komponenten des System die Startreaktion beschleunigen. Schon seit langem sind derartige in organischen Lösungsmitteln und/oder in Bindemitteln hinreichend lösliche Metallverbindungen solcher Metalle als sogenannte Trockenstoffe zur Lufttrocknung von Anstrichmitteln, Firnissen und dergleichen auf Basis ungesättigter Öle bekannt. In Betracht kommen hier insbesondere hinreichend öllösliche Verbindungen solcher Übergangsmetalle, die zum Auftreten in mehreren Wertigkeitsstufen befähigt sind. Die Fähigkeit zur Härtungsbeschleunigung ist bei den einzelnen Komponenten unterschiedlich stark ausgeprägt, vornehmlich kommen Verbindungen des Kobalts und/oder des Mangans in Betracht, aber auch Eisen wirkt härtungsbeschleunigend. Daneben und insbesondere in Kombination mit diesen hochwirksamen metallischen Komponenten können vergleichbare Verbindungen anderer Metalle eingesetzt werden, die gegebenenfalls auch zur Ausbildung mehrerer Wertigkeitsstufen befähigt sind. Eine ausführliche Darstellung solche Systeme findet sich beispielsweise in "Ullmann, Encyklopädie der technischen Chemie", 4. Auflage, Band 23 (1983), 421 bis 424.

Bekannt ist weiterhin, daß die beiden hier geschilderten Typen von Promotoren für die radikalische Polymerisationsauslösung durch Interaktion zu einer Wirkungsverstärkung führen können. So betrifft beispielsweise die Veröffentlichung von L. HORNER et al. "Autoxidationsstudien an N,N-dialkylierten Anilinderivaten", Makromolekulare Chemie 93 (1966), 69 bis 108, Untersuchungen zur Beschleunigung der spontanen Autoxidation solcher N-dialkylsubstituierter Arylaminverbindungen in reinem hochtrockenem Sauerstoffgas. In der ersten Stufe der spontanen Autoxidation bildet sich bei Einwirkung von getrocknetem Reinstsauerstoff die Aminhydroperoxidverbindung an alpha-ständigen aliphatischen CH-Gruppen. Diese spontane Autoxidation der N,N-dialkylierten Arylamine verläuft nur langsam. Die Mitverwendung von Kobalt-II-Verbindungen und in geringerem Maß die Mitverwendung von Eisen-III-Salzen führt nach den Angaben dieser Veröffentlichung zur Aktivierung der Autoxidation. In weiteren Arbeiten dieser Veröffentlichung wird gezeigt, daß auch der Essigsäure eine ausgesprochene Beschleunigungswirkung der Autoxidation an der tert.-Aminverbindung zuzusprechen ist, stärkere Säuren wie Trichloressigsäure oder Mineralsäuren bilden dagegen echte tert.-Ammoniumsalze, die nicht autoxidabel sind. Der gemeinsame Einsatz von Kobaltionen und Essigsäure führt unter Einwirkung von Reinstsauerstoff zur lebhaft katalysierten Autoxidation von Dialkylanilinverbindungen.

Die zitierte Veröffentlichung beschreibt schließlich einige Untersuchungen zur Auslösung der Polymerisation von Vinylverbindungen durch das System Dimethylanilin/Reinst-Sauerstoff/Kobaltsalz. Mit diesem System können jeweils hochreines Acrylnitril, Methylmethacrylat, Ethylacrylat und Styrol polymerisiert werden. Die Startreaktion wird als Redoxkatalyse gedeutet, bei der molekularer Sauerstoff die Rolle des Oxidationsmittels übernimmt. Irgendwelche Hinweise auf eine praktische Brauchbarkeit der untersuchten Mehrstoffsysteme für den Einsatz in der Polymerisationstechnik finden sich in der genannten Veröffentlichung nicht. Tatsächlich haben aber auch diese seit nahezu 25 Jahren der Fachwelt zuganglichen theoretischen Arbeiten keinen Anstoß zu ihrer Umsetzung in die Praxis gegeben.

Die Erfindung geht von der Aufgabe aus, unter Benutzung des geschilderten vorbekannten Wissens zu mehrkomponentigen Redoxsystemen neue Möglichkeiten für den praktischen Einsatz von Aktivatorsystemen zu entwicklen, die zur Polymerisationsauslösung an olefinisch ungesättigten Systemen in vereinfachter Weise Einsatz finden können. Den Aktivatorsystemen soll - in Abmischung mit radikalisch polymerisierbaren Stoffen bzw. Stoffgemischen der Praxis - die Fähigkeit immanent sein, durch Zutritt von Umgebungsluft aktivierbar zu sein. Diese Aktivierung soll in bevorzugten Ausführungsformen schon bei Raumtemperatur eintreten, gegebenenfalls ist eine mäßige Temperaturerhöhung vorgesehen. Ein besonders wichtiger Aspekt der Erfindung richtet sich auf Mehrstoffsysteme der genannten Art, die einfach durch Zutritt von Umgebungsluft bei Raumtemperatur zur Auslösung der Startreaktion einer radikalischen Polymerisation ungesättigter Systeme befähigt sind, und zwar bei zeitgesteuerter Aushärtung und vorbestimmbarer Topfzeit.

Gegenstand der Erfindung ist dementsprechend in einer ersten Ausführungsform die Verwendung von Aktivatorsystemen für die radikalische Polymerisation olefinisch ungesättigter Systeme enthaltend als Hauptkomponenten des Aktivatorsystems
N-alkylsubstituierte tert.-Arylamine mit wenigstens einer Alpha-ständigen aliphatischen CH-Bindung
im System wenigstens anteilsweise lösliche Metallverbindungen für die Trocknungsbeschleunigung ungesättigter Öle sowie
schwach saure Verbindungen, insbesondere monomere und/oder polymere Carbonsäuren, bevorzugt mit pK_{S}-Werten nicht kleiner als etwa 0,9
zur zeitgesteuerten Aushärtung vorbestimmbarer Topfzeit mittels Umgebungsluft bei Raumtemperatur und/oder mäßig erhöhten Temperaturen von formgebend verarbeitbaren Stoffgemischen und bevorzugt im Zuge ihrer formgebenden Verarbeitung, die die radikalisch polymerisierbaren Komponenten insbesondere zusammen mit gelösten und/oder ungelösten Füll- und/oder Hilfsstoffen enthalten.

Gegenstand der Erfindung sind weiterhin in einer zweiten Ausführungsform formgebend verarbeitbare radikalisch polymerisierbare Mehrstoffgemische enthaltend
ethylenisch ungesättigte polymerisierbare Verbindungen gewünschtenfalls in Abmischung mit löslichen und/oder unlöslichen Füll- und/oder sonstigen Hilfsstoffen sowie
ein durch Sauerstoffzutritt initiierbares Aktivatorsystem
wobei das Kennzeichen der Erfindung darin liegt, daß diese Mehrstoffgemische in Applikationsform als wenigstens schwach angedicktes Material vorliegen und ein durch Zutritt von Sauerstoff und Wasser, insbesondere durch Einwirkung von Umgebungsluft initiierbares Aktivatorsystem auf Basis der nachfolgenden Hauptkomponenten enthält:
N-alkylsubstituierte tert.-Arylamine mit wenigstens einer alpha-ständigen aliphatischen CH-Bindung
im System wenigstens anteilsweise lösliche Metallverbindungen für die Trocknungsbeschleunigung ungesättigter Öle sowie
schwach saure Carbonsäuren mit pK_{S}-Werten nicht kleiner als etwa 0,9.

Der Kern des erfindungsgemäßen Handelns liegt damit in der Auswahl des bestimmten und in dieser Kombination der geforderten Einsatzbedingungen und/oder -möglichkeiten erstmalig beschriebenen Reaktivsystems. Dieses System unterscheidet sich von den durch L. HORNER et al. beschriebenen Untersuchungen in mehrfacher Hinsicht:
Es soll die Möglichkeit geschaffen werden, unter praktischen Einsatzbedingungen zu arbeiten. Gefordert ist dabei insbesondere, daß die als "Autox"-Systeme wirksamen Katalysatorsysteme nicht mit reinem und vorgetrocknetem Sauerstoff, sondern mit Umgebungsluft des vergleichsweise beschränkten Sauerstoffgehalts und den stets vorliegenden Verunreinigungen einschließlich der Luftfeuchte in den Aktivzustand übergehen. Die zu polymerisierenden Komponenten liegen für praktische Anwendungszwecke nahezu immer in Abmischung mit Füll- und/oder anderen Hilfsstoffen vor.

Der Erfindung liegt die Erkenntnis zugrunde, daß unter Berücksichtigung der im nachfolgenden im einzelnen beschriebenen Elemente die Lösung der gestellten Aufgabe gelingt. Durch geeignete Hilfsmaßnahmen, die nachfolgend noch geschildert werden, können zusätzliche Freiheitsgrade für das praktische Arbeiten zugänglich werden. Durch einfachen Luftzutritt bei Umgebungstemperatur oder äußerstenfalls mäßig erhöhten Temperaturen gelingt die Aktivierung des Startersystems und damit die Reaktionsauslösung im Gesamtsystem zur formstabilen Aushärtung. Der für die formgebende Verarbeitung benötigte offene Zeitraum des Systems kann weitgehend frei bestimmt werden. Erfindungsgemäß zusammengestellte Mehrstoffsysteme bekommen damit praktische Bedeutung im weitesten anwendungstechnischen Sinn.

Im nachfolgenden werden zunächst die drei Hauptkomponenten des erfindungsgemäß verwendeten Aktivatorsystems im einzelnen beschrieben.

### N-alkylsubstituierte tert.-Arylamine

Geeignet sind alle entsprechenden Verbindungen mit wenigstens einer alpha-ständigen aliphatischen CH-Bindung. Die erfindungsgemäß eingesetzten Aminkomponenten entsprechen insbesondere der nachfolgenden allgemeinen Formel I 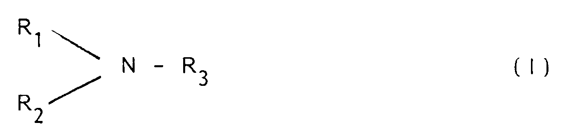
in der R₁ einen gegebenenfalls substituierten Arylrest bedeutet, R₂ die Bedeutung von R₁ hat oder aber auch einen gegebenenfalls substituierten Alkylrest bedeutet. Dieser Alkylrest kann dabei geradkettig oder verzweigt sein. R₃ bedeutet einen geradkettigen oder verzweigten Alkylrest, der auch substituiert sein kann, dem in R₂ gegebenenfalls vorliegenden Alkylrest gleich oder von ihm verschieden ist, sich jedoch auf jeden Fall dadurch auszeichnet, daß in Alpha-Stellung zum N wenigstens ein H-Atom vorliegt.

Der bevorzugte Arylrest ist der Phenylrest, der seinerseits auch substituiert sein kann, und zwar insbesondere alkylsubstituiert sein kann. Die in R₃ und gegebenenfalls R₂ vorliegenden Alkylreste enthalten bevorzugt jeweils bis zu etwa 10 insbesondere bis zu etwa 6 C-Atome. Entsprechenden C₁₋₃-Resten und hier insbesondere wiederum dem Methylrest kommen besondere Bedeutung zu. In einer bevorzugten Ausführungsform sind die Reste R₂ und R₃ entsprechende gegebenenfalls substituierte Alkylreste und der Rest R₁ ein gegebenenfalls substituierter Phenylrest, so daß N,N-dialkylsubstituierten Anilinverbindungen, die auch im Phenylring alkyliert sein können im allgemeinen der Vorzug gegeben wird. Die wichtigsten Komponenten im erfindungsgemäßen Sinne sind das Dimethylanilin und insbesondere das Dimethyl-p-Toluidin.

Grundsätzlich gelten für die Aktivität bzw. die Aktivierbarkeit dieser tert.-Aminverbindungen die von L. HORNER et al. a. a. O. angegebenen Gesetzmäßigkeiten: Kernsubstituenten beeinflussen die Autoxidationsgeschwindigkeit des Dimethylanilins.

Elektronendonatoren erhöhen die Autoxidabilität des Amins, elektrophile Substituenten setzen sie herab. p-Toluidinverbindungen sind dementsprechend reaktiver als die sonst strukturgleichen Anilinderivate. Auch bezüglich der Alkylsubstituenten in R₃ und gegebenenfalls R₂ gelten die von HORNER angegebenen allgemeinen Gesetzmäßigkeiten. Die Methylgruppe ist der Oxidation zum Hydroperoxid ungleich leichter zugänglich als alle anderen N-Alkylsubstituenten. Grundsätzlich gelten hier auch die bekannten Ergebnisse aus der Einwirkung von Dibenzoylperoxid auf tertiäre Amine wie sie in der zitierten Literaturstelle referiert sind.

### Im System wenigstens anteilsweise lösliche Metallverbindungen

Wie bereits ausgeführt, zeichnen sich die wichtigstens Trockenstoffe der betroffenen Art dadurch aus, daß vor allem Metallverbindungen solcher Metalle eingesetzt werden, die in mehreren Wertigkeitsstufen auftreten können. Besonders aktiv können hier ausgewählte Vertreter der Übergangsmetalle sein. Der jeweiligen Auswahl des Metalls kann unter anderem geschwindigkeitsbestimmender Charakter zur Polymerisationsauslösung aufgrund einer gewissen Temperaturabhängigkeit des reaktiven Eingriffs dieser Metallkomponente in das Gesamtgeschehen zukommen. Bei Raumtemperatur hochaktive Komponenten leiten sich insbesondere vom Kobalt und/oder Mangan ab. Auch dem Eisen kommt im Bereich von Raumtemperatur eine gewisse - wenn auch schwächere - Reaktionsbeschleunigung zu. Andere Metallkomponenten beispielsweise solche auf Basis von Vanadium können durch Temperaturerhöhung in ihrer Aktivität so gesteigert werden, daß kurzfristig die Polymerisationsreaktion ausgelöst werden kann.

Für das für viele Anwendungsgebiete besonders vorteilhafte Arbeiten bei Raumtemperatur eignen sich insbesondere Kobalt-und/oder Manganverbindungen, gegebenenfalls in Abmischung mit weiteren metallischen Komponenten wie Verbindungen des Blei, Cer, Calcium, Barium, Zink und/oder Zirkon. Es kann hier auf die einschlägige Fachliteratur verwiesen werden, vergleiche beispielsweise die zitierte Veröffentlichung in "Ullmann" a.a.O. sowie die dort zitierte Vor-Literatur.

Die hier betroffenen Metalle werden in Form solcher Verbindungen eingesetzt, daß sie wenigstens anteilsweise im Gesamtsystem löslich sind. Es kommen dabei sowohl seifenartige Metallverbindungen als auch in anderer Form insbesondere komplex an organische Reste gebundene Typen in Betracht. Typische Beispiele für das Arbeiten im Sinne des erfindungsgemäßen Handelns ist die Verwendung entsprechender Metallnaphthenate bzw. Metallacetylacetonate. Besteht eine hinreichende Löslichkeit von anorganischen Salzen im System dann ist allerdings auch die Verwendung solcher anorganischer Systeme möglich. Ein typisches Beispiel hierfür ist das Eisenchlorid, das bei seinem Einsatz im erfindungsgemäßen System eine deutlich beschleunigende Wirkung zeigt.

Es kann zweckmäßig sein, die Metallverbindungen jeweils in einer niedrigen Wertigkeitsstufe des Metalls - beispielsweise also als Kobalt (II) oder Mangan (II) - einzusetzen. In anderen Fällen eignet sich auch die Verwendung der Metallverbindung in der höheren Wertigkeitsstufe des Metalls. So wird beispielsweise Eisenchlorid bevorzugt in Form des Fe³⁺-Salzes verwendet.

### Carbonsäureverbindung(en)

Entscheidende Bedeutung kommt bei der Auswahl dieser Komponenten zunächst der Azidität der freien Carbonsäure zu. Der pK_{S}-Wert der freien Säure soll nicht kleiner sein als etwa 0,9, der bevorzugte Grenzwert liegt bei etwa 1.

Werden deutlich stärker saure Komponenten verwendet, dann kommt die Reaktionsbeschleunigung zum Stillstand. Ersichtlich wird das an den folgenden Beispielen: Der pK_{S}-Wert der Trichloressigsäure liegt bei etwa 0,6. Der Zusatz von Trichloressigsäure zum System zerstört die Fähigkeit des erfindungsgemäß eingesetzten Initiator-Mehrstoffsystems zur Auslösung von Polymerisationsreaktionen. Dichloressigsäure ist demgegenüber eine schwächere Carbonsäure. Ihr pK_{S}-Wert liegt bei etwa 1,3. Diese Dichloressigsäure ist zur Auslösung von Polymerisationsreaktionen im Sinne des erfindungsgemäßen Handelns sehr gut geeignet. Stark saure Mineralsäuren, beispielsweise Salzsäure, stören ebenfalls die Fähigkeit zur Polymerisationsauslösung durch die erfindungsgemäß verwendeten Aktivatorsysteme. Essigsäure - pK_{S}-Wert der Essigsäure etwa 4,76 - eignet sich hervorragend zur beschleunigten Reaktionsauslösung.

Die Obergrenze des pK_{S}-Wertes kann im Bereich sehr schwach saurer Verbindungen - als freie Carbonsäure bestimmt - gesehen werden. Zahlenmäßig liegt damit die Obergrenze bei pK_{S}-Werten von etwa 13, bevorzugt bei etwa 11,5. Besonders geeignet sind allerdings solche Carbonsäuren, die pK_{S}-Werte bis etwa 8, vorzugsweise bis etwa 6 oder 7 aufweisen. Besonders wirkungsvolle Komponenten der hier betroffenen Art leiten sich dann von Carbonsäuren ab, die im hydrolysierten Zustand pK_{S}-Werte im Zahlenbereich von etwa 1 bis 6 oder 7 besitzen.

Die erfindungsgemäß einzusetzenden Carbonsäuren können eine oder mehrere Carboxylgruppen aufweisen. Die Konstitution der Säure als solche ist - der richtige pK_{S}-Wert vorausgesetzt - nicht so sehr der entscheidende Parameter. Es kann vorteilhaft sein, Carbonsäuren mit 1 bis 4 Carboxylgruppen und insbesondere mit 1 oder 2 Carboxylgruppen den erfindungsgemäßen Systemen zugrundezulegen. Die Auswahl der jeweils betroffenen Carbonsäure wird weitgehend durch entsprechende Zweckmäßigkeitsüberlegungen bestimmt. Leicht zugängliche Carbonsäuren wie niedere aliphatische Carbonsäuren oder entsprechende aromatische mono-oder polyfunktionelle Carbonsäuren sind geeignete Komponenten. Geeignete aliphatische Carbonsäuren sind die C₁₋₁₈- bevorzugt C₁₋₁₀-Monocarbonsäuren, wobei der Essigsäure wiederum besondere Bedeutung zukommen kann. Geeignete aromatische Carbonsäuren sind die Benzoesäure oder entsprechende Polycarbonsäuren beispielsweise die Trimellith- oder die Pyromellithsäure. Wie am Beispiel der Dichloressigsäure gezeigt, eignen sich auch substituierte Säuren dieser Art, sofern ihr pK_{S}-Wert den angegebenen Grenzbedingungen entspricht.

In einer Ausführungsform der Erfindung werden die freien Carbonsäuren bzw. Carboxylgruppen des Aktivatorsystems wenigstens anteilsweise durch solche COOH-Gruppen ausgebildet, die an vorgebildete Oligomer- und/oder Polymerverbindungen gebunden sind. Hier kann dann von diesen Carboxylgruppen im Sinne des erfindungsgemäßen Handelns mehrfach Gebrauch gemacht werden. In der Phase der Polymerisationsauslösung kommt diesen Säurekomponenten die beschriebene Aktivierungsfunktion zu. Ganz unabhängig davon gelten dann aber die allgemeinen chemischen Gesetzmäßigkeiten, nach denen solche freien Carboxylgruppen der insbesondere formstabil ausgehärteten Reaktionsmasse charakteristische Eigenschaften verleihen können. Lediglich beispielsweise sei hier auf eine mögliche Haftvermittlung gegenüber Feststoffflächen aus beispielsweise Metall oder die erhöhte Angriffsmöglichkeit alkalischer Medien genannt.

Die in den Oligomer- und/oder Polymerkomponenten vorliegenden freien Carboxylgruppen können dabei - je nach der bestimmten Struktur der oligomeren oder polymeren Zusatzstoffe - in das entstehende formstabile Reaktionsprodukt reaktiv eingebunden sein und/oder sie können als nicht-reaktive Füllstoffe im ausgehärteten Reaktionsprodukt vorliegen.

Die Erfindung umfaßt eine solche Mehrfunktionalität eingesetzter saurer Komponenten aber auch in ganz anderer Weise:
Radikalisch ausgelöste Polymerisationsreaktionen können in der Regel unter Mitverwendung ethylenisch ungesättigter freier Säuren durchgeführt werden. Bekannt sind hier insbesondere als reaktive Mono- und/oder Dicarbonsäuren Verbindungen wie Acrylsaure, Methacrylsäure, Crotonsäure, Itaconsäure, Maleinsäure und/oder Fumarsäure aber auch olefinisch ungesättigte Verbindungen von der Art der Tetrahydrophthalsäure und verwandter Verbindungen. Bekannt ist schließlich aber auch, daß längerkettige, ein- oder mehrfach olefinisch ungesättigte Carbonsäuren insbesondere ungesättigte Fettsäuren der genannten Art mit beispielsweise 10 bis 30 C-Atomen und insbesondere 12 bis 24 C-Atomen über ihren Gehalt an ethylenischen Doppelbindungen in radikalisch ausgelöste Polymerisationsreaktionen einbezogen werden können.

In der hier besprochenen Ausführungsform der Erfindung werden solche Säurekomponenten nicht nur als Bestandteile des durch Polymerisationsreaktion aushärtenden Reaktionsgemisches aktiv, über ihre freien Säuregruppen können sie gleichzeitig wenigstens anteilsweise die Säurefunktion im erfindungsgemäß eingesetzten Aktivatorsystem aus tert.-Aminverbindung, wenigstens anteilsweise löslicher Metallverbindung und saurer Komponente begrenzter Acidität übernehmen. Es leuchtet ein, daß sich damit eine vielgestaltige Variation der einzusetzenden Wirkstoffgemische verbindet.

Aktivatorsysteme aus den hier geschilderten drei Hauptkomponenten aromatische Aminverbindung, wenigstens anteilsweise löslicher metallischer Trockenstoff und schwache Säure sind in der Lage, nach Aufnahme von Umgebungsluft alle die radikalisch polymerisierbaren olefinisch ungesättigten Systeme zu initiieren, die bisher mit den verschiedenartigsten insbesondere peroxidischen Startersystemen eingesetzt werden. Zur Definition der weiteren Bestandteile der erfindungsgemäß beschriebenen formgebend verarbeitbaren radikalisch polymerisierbaren Mehrstoffgemische kann insoweit auf die umfangreichen Angaben der einschlägigen Literatur Bezug genommen werden, die sich mit der Herstellung und Verarbeitung von Systemen beschäftigt, die auf Basis olefinisch ungesättigter radikalisch polymerisierbarer Verbindungen aufgebaut sind. In der Fachwelt steht heute eine außerordentlich große Zahl von Stoffsystemen dieser Art zur Verfügung, die auf den jeweiligen Einsatzzweck in ihren Eigenschaften zugeschnitten sind.

Für eine Polymerisationsauslösung mittels des im erfindungsgemäßen Sinne aktivierten Luftsauerstoffs insbesondere bei Raumtemperatur oder nur mäßig erhöhten Temperaturen eignen sich besonders Systeme, die sich bereits beim Einsetzen der Polymerisationsreaktion durch wenigstens leicht erhöhte Viskositätswerte auszeichnen. Versuche haben tatsächlich gezeigt, daß die Verwendung der Umgebungsluft auch beim Einsatz einer an sich hoch aktiven Kombination von Aktivatorwirkstoffen dann nicht oder wenigstens nicht im gewünschten Zeitraum zur Reaktionsauslösung führt, wenn hoch-mobile ungesättigte Systeme eingesetzt werden, auch wenn diese an sich für ihre hohe Reaktivität in der Polymerisationsreaktion bekannt sind. Typische Beispiele für solche Systeme sind in üblicher Weise stabilisierte niedere Acrylatester, Methacrylester oder Styrol. Daher werden bevorzugt Acrylat- und/oder Methacrylat-Verbindungen bzw. Systeme, Styrol bzw. Styrolderivate und/oder Acrylnitril enthaltende Komponenten als ethylenisch ungesättigte polymerisierbare Komponenten verwendet. Ein Aktivatorsystem aus beispielsweise Dimethyl-p-toluidin, löslichen Kobaltverbindungen und Essigsäure härtet bei Zutritt von Umgebungsluft und bei Raumtemperatur handelsübliche ungesättigte Komponenten der gerade zuvor genannten Art erst dann aus, wenn die Viskosität des Gesamtsystems leicht angehoben ist.

Allgemein gilt dementsprechend, daß erfindungsgemäß radikalisch polymerisierbare Systeme verwendet werden sollten, die eine Anfangsviskosität von wenigstens etwa 30 bis 100 mPas, bevorzugt von wenigstens etwa 200 oder 300 mPas aufweisen. Ein besonders sicheres Anspringen der Polymerisationsreaktion kann bei Systemen erwartet werden, deren Anfangsviskosität wenigstens etwa 500 mPas und insbesondere wenigstens etwa 1000 mPas beträgt. Alle diese Viskositätswerte sind bestimmt als Brookfield-Viskosität. Handelsubliche Klebstoffsysteme zeigen bekanntlich Viskositäten von wenigstens etwa 3000 mPas und insbesondere Viskositätswerte im Bereich bis etwa 10000 mPas. Materialien dieser Art sind verständlicherweise für die Verarbeitung im Sinne der Erfindung hervorragend geeignet. Die Erfindung ist aber darauf keineswegs eingeschränkt. Auch wesentlich dünner-viskose Systeme beispielsweise streichfähige Lacksysteme - die insbesondere als lösungsmittelfreie Systeme Verwendung finden - sind für den Mechanismus der hier beschriebenen Reaktionsauslösung geeignet, sofern die geschilderten Mindestwerte für die Anfangsviskosität des formgestaltend zu verarbeitenden Materials eingehalten werden. Entsprechendes gilt für andere Einsatzgebiete, beispielsweise für die Herstellung von Kunststofformteilen auf der Basis von Styrol/ungesättigten Polyesterharzen.

Die erforderlichen Anfangsviskositätswerte können insbesondere durch Stoffgemische eingestellt werden, die einen hinreichenden Gehalt an oligomeren und/oder polymeren Komponenten gegebenenfalls in Abmischung mit niedermolekularen ungesättigten, bei Raumtemperatur flüssigen Komponenten wie (Meth)acrylate aufweisen. Entsprechend viskose Massen können aber auch ausschließlich aus Vorkondensaten geeigneter Fließfähigkeit bestehen. Im einzelnen gilt hier das umfangreiche Wissen der Fachwelt zu solchen durch Radikalpolymerisation härtbaren ethylenisch ungesättigten Stoffgemischen.

Die erfindungsgemäß einzusetzenden Mehrstoffgemische können als Mehrkomponentensysteme vorgesehen sein. Zum praktischen Einsatz des Systems werden in an sich bekannter Weise die Komponenten miteinander vermischt. Die offene Topfzeit des Systems kann durch geeignete Auswahl und Anpassung der Hauptkomponenten des Aktivatorsystems geregelt werden, so daß also auch hier die Auslösung der Startreaktion und damit letztlich die Aushärtung des Systems unter Umgebungsbedingungen an der Luft möglich ist. In einer bevorzugten Ausführungsform der Erfindung sind die betroffenen Mehrstoffgemische aus Aktivatorsystem und polymerisierbaren Komponenten als auch bei Luftzutritt nichtreaktives Mehrkomponentensystem ausgebildet, wobei als Mehrkomponentensysteme insbesondere 2-Komponenten-Systeme vorliegen. Hierbei ist es weiterhin besonders bevorzugt, die drei Hauptkomponenten der erfindungsgemäß eingesetzten Aktivatorsysteme so voneinander zu trennen, daß die tert. N-Verbindung getrennt von den Metallverbindungen und den freien Carbonsäuren gehalten ist. Beide Komponenten können dann im allgemeinen ethylenisch ungesättigte Reaktivmasse enthalten. Zur Verarbeitung bedarf es dann nur der Vermischung dieser beiden getrennt gehaltenen Komponenten, der Formgebung während der offenen Topfzeit des Systems und des Zutritts der Umgebungsluft.

Die Erfindung erlaubt jeweils die Zusammenstellung optimierter Wirkstoffgemische. Unter Wahrung der erfindungsgemäßen Gesetzmäßigkeiten können lösliche und/oder unlösliche Füllstoffe, Elastifizierungsmittel, Verdickungsmittel, Thixotropierungsmittel, Pigmente, Haftvermittler, Stabilisatoren und dergleichen mitverwendet werden, ohne daß die Funktionsfähigkeit des erfindungsgemäßen Aktivatorsystems gefährdet ist. Voraussetzung hierfür ist natürlich daß durch Auswahl der Hilfs- und Füllstoffe sichergestellt ist, Störungen in der Interaktion der Aktivatorkomponenten auszuschließen. Hierzu gilt allgemeines chemisches Wissen.

Eine Besonderheit der erfindungsgemäßen Mehrstoffgemische bzw. der erfindungsgemäß in diesen Mehrstoffgemischen eingesetzten Aktivatorsysteme liegt darin, daß eine zusätzliche Inhibierung und damit Steuerung des Gesamtsystems möglich wird.

Zur Inhibierung des erfindungsgemäß eingesetzten "Autox"-Systems stehen dabei verschiedenartige Mechanismen zur Verfügung, von denen im folgenden die drei Grundtypen 1 bis 3 aufgezählt seien:
1. Stabilisierung gegen O₂, Zusatz von Antioxidantien
2. Stabilisierung gegen R-OOH, Zusatz von Reduktionsmittel
3. Stabilisierung gegen Radikale, Zusatz von Radikalinhibitoren
Aus dem allgemeinen chemischen Wissen seien im nachfolgenden typische Stabilisatorkomponenten aufgezählt, wobei jeweils in Klammern hinter der speziellen Verbindung angegeben ist, welchen der zuvor aufgelisteten drei Mechanismen der Stabilisator zuzuordnen ist:
Pyrogallol (1), O₂-inhibierte Acrylate (1), Hydrochinon (1, 3), Hydrochinon-Monomethylether (1, 3), Triphenylphosphin (2), Tributylphosphit (2), Butylhydroxytoluol (3), Phenothiazin (3).

In den Mehrstoffgemischen der Erfindung machen die Aktivatorgemische bevorzugt nicht mehr als etwa 25 Gew.-% und insbesondere nicht mehr als etwa 10 Gew.-% - jeweils bezogen auf das Gewicht des Gesamtsystems - aus. Je nach Aktivität der eingesetzten Komponenten kann dabei das Gewicht des Aktivatorgemisches sehr stark abgesenkt werden und beispielsweise bis in den Bereich von etwa 0,1 Gew.-% oder wenigstens etwa 0,5 Gew.-% verringert werden. Besonders geeignet können Mengen des Aktivatorsystems von wenigstens etwa 1 Gew.-% bevorzugt bis zu etwa 8 Gew.-% und besonders von etwa 1 bis 7 Gew.-% sein. Alle diese Angaben beziehen sich dabei einerseits auf das Gesamtgewicht des erfindungsgemäßen Mehrstoffsystems und das Gesamtgewicht der drei Hauptkomponenten des Aktivatorsystems.

Die drei Hauptkomponenten des Aktivatorsystems können dabei vorzugsweise in den folgenden Mengenverhältnissen zueinander eingesetzt werden - hier Gew.-% bezogen auf das Gemisch der drei Aktivatorbestandteile:
5 bis 20 %, vorzugsweise 5 bis 15 % der Metallverbindung
30 bis 60 %, vorzugsweise 40 bis 55 % der tertiären Aminverbindung
30 bis 60 %, vorzugsweise 40 bis 55 % der verkappten schwachen Säure.

Die jeweils einzusetzenden Mengen der Metallverbindungen lassen sich insbesondere auch über das Gewichtsverhältnis von Metallgewicht zu Gewicht des mehrkomponentigen Aktivatorsystems wie folgt definieren:
Bevorzugte Metallmengen liegen innerhalb des Bereiches von 0 ,01 bis 5 Gew.-%, besonders 0,05 bis 2 Gew.-% und insbesondere innerhalb des Bereiches von etwa 0 ,1 bis 1 Gew.-% Metall, jeweils bezogen auf das Gesamtgewicht der Aktivatorbestandteile.

Werden zur Steuerung des Reaktionsablaufs und/oder der offenen Topfzeit Inhibitoren und/oder Stabilisatoren der zuvor angegebenen Art mitverwendet, so bemißt sich ihre Menge nach dem angegebenen Zweck. Sie kann im Einzelfall durch fachgerechte Überlegungen und/oder durch Vorversuche einfach ermittelt werden. Die mitverwendeten Regulatoren werden üblicherweise wenige Prozent - z. B. etwa 2 bis 5 Gew.-% - des Gesamtgemisches nicht überschreiten und liegen im allgemeinen unterhalb 1 Gew.-%.

Als in der Praxis vielseitig verwendbare und gebräuchliche Mischungen radikalisch polymerisierbarer Massen werden Stoffgemische von Oligomer- und/oder Polymersubstanzen zusammen mit ethylenisch ungesättigten Monomeren niederen Molekulargewichts eingesetzt. Die Mischungskomponenten höheren Molekulargewichts sind dabei häufig in den Monomeren wenigstens anteilsweise löslich. Stoffgemische dieser Art sind für die Verarbeitung im Sinne der Erfindung besonders geeignet. Der Gehalt an Monomeren - beispielsweise vom Typ (Meth)acrylate, des gegebenenfalls substituierten Styrols und/oder des Acrylnitrils - liegt im allgemeinen bei wenigstens 10 Gew.-%, bevorzugt bei wenigstens etwa 20 Gew.-% und kann in vielen Anwendungsfällen wenigstens etwa 40 Gew.-% ausmachen, Gew -% hier jeweils auf das reaktionsbereite fertige Gemisch bezogen. Die Monomerkomponente kann dabei die gewichtsmäßig gesehen weitaus überwiegende Komponente sein, so daß also beispielsweise 60 bis 80 Gew.-% der Gesamtmasse durch das niedermolekulare Monomere gebildet werden. Wie zuvor dargestellt ist hier allerdings darauf zu achten, daß durch die Mitverwendung einer hinreichenden Menge an Verbindungen höheren Molekulargewichts und/oder durch sonstige Eindickungsmittel die wenigstens leicht erhöhte Anfangsviskosität der Stoffgemische zur sicheren Reaktionsauslösung bei Luftzutritt gewährleistet ist.

In charakteristischen Anwendungsbeispielen, die als bevorzugte Ausführungsformen in den Rahmen der Erfindung fallen, sind diese Einsatzbedingungen ohnehin gewährleistet. Ohne einen Anspruch auf Vollständigkeit seien hier die folgenden Beispiele genannt: Aerob härtende Klebstoffsysteme, streichfähige Mittel für die Oberflächenbeschichtung mit polymerisierbaren insbesondere lösungsmittelfreien Lacken und Anstrichmittel im Sinne von streichfähigen lufttrocknenden Lacksystemen sowie die Herstellung von Formteilen unter Reaktionsauslösung durch Einwirkung von Umgebungsluft, beispielsweise auf Basis von Styrol/ungesättigte Polyesterharze.

### Beispiele

### Beispiele 1 bis 9

| Lösung A | |
|---|---|
| MMA (Methylmethacrylat) | 60 |
| Polyacrylat (Plexigum^{R} MB 319 der Fa. Röhm/löslicher Füllstoff) | 30 |
| Kobaltacetylacetonat | 0,24 |
| Acrylsäure | 10 |

| Lösung B | |
|---|---|
| MMA | 60 |
| Plexigum^{R} MB 319 | 30 |
| N,N-Dimethyl-p-toluidin | 10 |

Die zahlenmäßigen Mengenangaben sind jeweils Gewichtsteile.

Die beiden Lösungen A und B wurden in verschiedenen Mengenverhältnissen gemischt und mit den so erhaltenen Klebstoffzubereitungen wurden PVC-Verklebungen durchgeführt.

| Bsp. Nr. | Mengenverhältnis A : B | Topfzeit (min.) | Zugscherfestigkeit (N/mm²) |
|---|---|---|---|
| 1 | 9 : 1 | 11 | 1,0 |
| 2 | 8 : 2 | 11 | 1,4 |
| 3 | 7 : 5 | 12 | 1,4 |
| 4 | 6 : 4 | 12 | MB (1,7) |
| 5 | 5 : 5 | 13 | MB (1,9) |
| 6 | 4 : 6 | 13 | MB (3,2) |
| 7 | 3 : 7 | 16 | MB (2,5) |
| 8 | 2 : 8 | 20 | MB (2,7) |
| 9 | 1 : 9 | 36 | MB (3,6) |
| MB = Materialbruch | | | |

Um eine ausreichende Sauerstoffaufnahme zu gewährleisten, wurde das jeweilige Gemisch 1 Minute an der Luft kräftig gerührt und die mit der Klebstoffzubereitung versehenen Fügeteile vor dem Fügen 2 Minuten an der Luft liegengelassen.

### Beispiele 10 bis 19

### Variation der Aminkonzentration

Gemische von
6 g MMA
4 g Plexigum^{R} MB 319
0,5 g Essigsäure und
50 mg einer Lösung von Kobaltnaphthenat in Benzin (6 % Co) sowie unterschiedliche Mengen N,N-Dimethyl-p-Toluidin
härten bei Kontakt mit Luftsauerstoff aus.

| Bsp. Nr. | Menge Amin (%) | Topfzeit (min.) | Zugscherfestigkeit (PVC) (N/mm²) |
|---|---|---|---|
| 10 | 1 | 13 | 3,1 (MB) |
| 11 | 2 | 12 | 8,1 (MB) |
| 12 | 3 | 12 | 7,6 (MB) |
| 13 | 4 | 11 | 4,7 (MB) |
| 14 | 5 | 11 | 7,1 (MB) |
| 15 | 6 | 10 | 8,5 (MB) |
| 16 | 7 | 14 | 6,4 (MB) |
| 17 | 8 | 14 | 7,6 (MB) |
| 18 | 9 | 15 | 7,6 (MB) |
| 19 | 10 | 13 | 5,8 (MB) |

### Beispiele 20 bis 29

### Variation der Carbonsäuren und der Monomere

Mischungen aus
89,5 % Monomer(-mischung) und 10,5 % Initiatorsystem, bestehend aus
5 % N,N-Dimethyl-p-toluidin
0,5 % Kobaltnaphthenatlösung in Benzin (6 % Co)
5 % Carbonsäure
härten durch Kontakt mit Luftsauerstoff aus.

| Bsp. Nr. | Monomer | Carbonsäure | Topfzeit (min.) |
|---|---|---|---|
| 20 | K 8¹⁾/MMA | Essigsäure | 10 |
| 21 | " | Propionsäure | 11 |
| 22 | " | Chloressigsäure | 10 |
| 23 | " | Carboset 515²⁾ | 90 |
| 24 | MMA/PMMA³⁾ | Essigsäure | 10 |
| 25 | " | Acrylsäure | 9 |
| 26 | " | Dichloressigsäure | 12 |
| 27 | Methacrylat-termin. PUR⁴⁾ | Essigsäure | 2 |
| 28 | THF-MA/PMMA⁵⁾ | Essigsäure | 11 |
| 29 | MMA/PMMA | Benzoesäure | 25 |

| | | | |
|---|---|---|---|
| 1) 1 : 1-Mischung aus MMA und einem Methacrylat-terminierten Polyester-PUR (Umsetzungsprodukt aus CAPA^{R} 200 (Polycaprolacton der Fa. Union Carbide, 0HZ 209, 2 Mol), 2,4-Toluylendiisocyanat (Desmodur^{R} T 100, Fa. Bayer, 3 Mol), B-01/20 (Polypropylenglykolmonobutylether der Fa. Hoechst, 1 Mol), Hydroxiethylmethacrylat (HEMA, 1 Mol) | | | |
| 2) Acrylsäure-Copolymer der Fa. B. F. Goodrich, Säurezahl 60 bis 65 | | | |
| 3) Mischung aus 60 Teilen MMA und 40 Teilen Plexigum^{R} MB 319 (Polyacrylat der Fa. Röhm) | | | |
| 4) Methacrylat-terminiertes PUR (Umsetzungsprodukt aus jeweils 1 Mol B 01-20, TDI und HPMA) | | | |
| 5) Mischung aus 2 Teilen Tetrahydrofurfuryl-methacrylat und 1 Teil Plexigum^{R} MB 319 | | | |

### Beispiel 30

Eine Mischung aus
53 % MMA
25 % Plexigum^{R} MB 319
4 % N,N-Dimethyl-p-toluidin
4 % Essigsäure
3 % Mn(II)-octoat
polymerisiert 15 Minuten nach Kontakt mit Luftsauerstoff.

### Beispiele 31 bis 34

### Variation der Amine

Mischungen bestehend jeweils aus
50 Teilen MMA
40 Teilen Plexigum^{R} MB 319
3 Teilen Essigsäure
3 Teilen Amin
0,5 Teilen Kobalt-Naphthenat

| Beispiel Nr. | Amin | Topfzeit (min.) |
|---|---|---|
| 31 | N,N-Dimethylanilin | 60 |
| 32 | N-Ethyl-N-methylanilin | 47 (5 Teile Amin, 5 Teile Säure) |
| 33 | N,N-Dimethyl-m-Toluidin | 26 |
| 34 | N,N-Dimethyl-p-toluidin | 18 |

### Beispiel 35

Das Di-methacrylat von Bisphenol A x 2 EO (Diacryl 101) wird ohne Zusatz von Verdickungsmittel mit dem folgenden Aktivator-System versetzt: 5 % Essigsäure, 5 % Dimethyl-p-toluidin, 0,5 % Kobaltlösung.

Die Topfzeit beträgt 1 Minute.

### Beispiel 36

Das Umsetzungsprodukt von Bisphenol-A-Diglycidylether mit Methacrylsäure (Rütapox^{R} 959 der Fa. Rütgers) wird ohne Verdikkungsmittel mit dem Initiatorgemisch des Beispiels 35 versetzt. Die Topfzeit liegt unter 1 Minute.

### Beispiel 37

Das Handelsprodukt Vestopal^{R} 150 der Fa. Hüls (ungesättigtes Polyesterharz 66 % in Styrol) wird ohne zusätzliches Verdikkungsmittel mit dem Initiatorsystem des Beispiels 35 versetzt. Die Topfzeit beträgt 1,5 Minuten.

### Beispiel 38

Ein Gemisch aus Cyclohexyl-methacrylat und Plexigum^{R} MB 319 wird mit dem nachfolgenden Initiatorsystem versetzt: 3 % Essigsäure, 3 % Dimethyl-p-toluidin, 0,5 % Kobaltlösung.

Die Topfzeit beträgt 16 Minuten.

## Patentansprüche

1. Verwendung von Aktivatorsystemen für die radikalische Polymerisation olefinisch ungesättigter Systeme enthaltend als Hauptkomponenten des Aktivatorsystems
N-alkylsubstituierte tert.-Arylamine mit wenigstens einer Alpha-ständigen aliphatischen CH-Bindung
im System wenigstens anteilsweise lösliche Metallverbindungen für die Trocknungsbeschleunigung ungesättigter Öle sowie
schwach saure Verbindungen mit pK_{S}-Werten nicht kleiner als 0,9
zur zeitgesteuerten Aushärtung vorbestimmbarer Topfzeit mittels Umgebungsluft bei mindestens Raumtemperatur von formgebend verarbeitbaren Stoffgemischen, die als fließfähiges, bevorzugt als wenigstens schwach angedicktes streichfähiges bis pastös verteilbares Material ausgebildet sind, und bevorzugt im Zuge ihrer formgebenden Verarbeitung, die die radikalisch polymerisierbaren Komponenten insbesondere zusammen mit gelösten und/oder ungelösten Füll- und/oder Hilfsstoffen enthalten.

2. Verwendung nach Anspruch 1, dadurch gekennzeichnet, daß die schwach sauren Verbindungen momomere und/oder polymere Carbonsäuren sind.

3. Verwendung nach Anspruch 2, dadurch gekennzeichnet, daß die Mehrstoffgemische aus Aktivatorsystem und polymerisierbaren Komponenten als auch bei Luftzutritt nichtreaktives Mehrkomponentensystem ausgebildet sind, wobei als Mehrkomponenten-Systeme insbesondere 2-Komponenten-Systeme vorliegen, in denen die tert. N-Verbindung getrennt von den Metallverbindungen und den freien Carbonsäuren gehalten ist und wobei die Komponenten zur formgebenden Verarbeitung und Aushärtung vereinigt werden.

4. Verwendung nach Ansprüchen 1 bis 3, dadurch gekennzeichnet, daß die Aktivator enthaltenden Mehrstoffgemische bei der formgebenden Verarbeitung mit Viskositäten (Brookfield) von wenigstens etwa 30 bis 100 mPas, insbesondere von wenigstens etwa 300 mPas eingesetzt werden.

5. Verwendung nach Ansprüchen 1 bis 4, dadurch gekennzeichnet, daß im Aktivatorsystem als N-alkylsubstituierte Arylamine Verbirdungen der allgemeinen Formel I 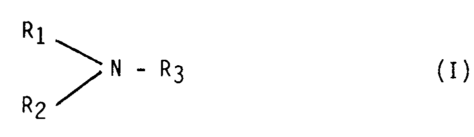 verwendet werden, in der
R₁ einen gegebenenfalls substituierten Arylrest, insbesondere einen gegebenenfalls alkylsubstituierten Phenylrest bedeutet,
R₂ die Bedeutung von R₁ hat oder einen gegebenenfalls substituierten geradkettigen oder verzweigten Alkylrest und
R₃ einen geradkettigen oder verzweigten Alkylrest bedeutet, der auch substituiert sein kann, dabei jedoch in Alpha-Stellung zum N wenigstens ein H-Atom aufweist.

6. Verwendung nach Ansprüchen 1 bis 5, dadurch gekennzeichnet, daß als Verbindungen der allgemeinen Formel I im aromatischen Ring substituierte oder unsubstituierte Dialkylanilinverbindungen eingesetzt werden, deren Alkylreste jeweils bevorzugt bis zu 10, insbesondere bis zu 6 C-Atome aufweisen, wobei gegebenenfalls Ring-alkylsubstituierte Anilinderivate, insbesondere solche von der Struktur des Dimethylanilins und/oder des Dimethyl-p-Toluidins besonders geeignet sind.

7. Verwendung nach Ansprüchen 1 bis 6, dadurch gekennzeichnet, daß als im System wenigstens anteilsweise lösliche, metallhaltige Trockenstoffe Verbindungen von Metallen eingesetzt werden, die in mehreren Wertigkeitsstufen auftreten, insbesondere Verbindungen entsprechender Übergangsmetalle, wobei bevorzugt die Metallionen jeweils in ihrer niedrigen Wertigkeitsstufe vorliegen.

8. Verwendung nach Ansprüchen 1 bis 7, dadurch gekennzeichnet, daß in organischen Medien lösliche Metallverbindungen des Kobalts und/oder des Mangans oder auch des Eisens verwendet werden, wobei das Eisen auch als Fe³⁺-Verbindung eingesetzt werden kann.

9. Verwendung nach Ansprüchen 1 bis 8, dadurch gekennzeichnet, daß Carbonsäuren mit pK_{S}-Werten nicht kleiner als etwa 1, vorzugsweise nicht kleiner als etwa 1,3 eingesetzt werden.

10. Verwendung nach Ansprüchen 1 bis 9, dadurch gekennzeichnet, daß saure Verbindungen einer Obergrenze des pK_{S}-Wertes von etwa 13, bevorzugt von etwa 11,5 und insbesondere entsprechende Carbonsäuren mit einer Obergrenze des pK_{S}-Wertes der freien Carbonsäure von etwa 7 eingesetzt werden.

11. Verwendung nach Ansprüchen 1 bis 10, dadurch gekennzeichnet, daß Carbonsäuren mit einer oder mehreren Carboxylgruppen, insbesondere mit 1 bis 4 Carboxylgruppen verwendet werden.

12. Verwendung nach Ansprüchen 1 bis 11, dadurch gekennzeichnet, daß als ethylenisch ungesättigte polymerisierbare Komponenten Acrylat- und/oder Methacrylat- Verbindungen bzw. -Systeme, Styrol bzw. Styrolderivate und/oder Acrylnitril enthaltende Komponenten verwendet werden, die auch ganz oder teilweise in Form reaktiver vorgebildeter Oligomer- und/oder Polymerverbindungen vorliegen können.

13. Verwendung nach Ansprüchen 1 bis 12, dadurch gekennzeichnet, daß zusätzlich im System lösliche und/oder unlösliche Füllstoffe, Verdickungsmittel, Elastifizierungsmittel, Pigmente, Haftvermittler, Stabilisatoren und/oder weitere Hilfsstoffe enthaltende Mehrstoffsysteme verwendet werden.

14. Verwendung nach Ansprüchen 1 bis 13, dadurch gekenzeichnet, daß zur Stabilisierung gegen unerwünschten Sauerstoffzutritt und/oder zur Regulierung der Topfzeit Antioxidantien, Reduktionsmittel und/oder Radikalinhibitoren enthaltende Stoffgemische eingesetzt werden.

15. Verwendung nach Ansprüchen 1 bis 14, dadurch gekennzeichnet, daß Mehrstoffgemische eingesetzt und formgebend verarbeitet werden, in denen das Aktivatorgemisch nicht mehr als etwa 25 Gew.-% vorzugsweise nicht mehr als etwa 10 Gew.-% des Gesamtsystems ausmacht und dabei bevorzugt wenigstens 0,1 Gew.-% und insbesondere etwa 1 bis 8 Gew.-% des Gesamtsystems beträgt.

16. Verwendung nach Ansprüchen 1 bis 15, dadurch gekennzeichnet, daß die Komponenten des Aktivatorsystems etwa in den folgenden Mengenverhältnissen zueinander eingesetzt werden - Gew.-% bezogen auf das Gemisch der drei Aktivatorbestandteile:
5 bis 20, vorzugsweise 5 bis 15 % Metallverbindung bzw.
0,01 bis 5, vorzugsweise 0,05 bis 2 Gew.-% Metall
30 bis 60, vorzugsweise 40 bis 55 % tert. Aminverbindung
30 bis 60, vorzugsweise 40 bis 55 % der schwachen Säure.

17. Verwendung nach Ansprüchen 1 bis 16, dadurch gekennzeichnet, daß Systeme eingesetzt werden, deren Gehalt an radikalisch polymerisierbaren Komponenten, insbesondere ihr Monomergehalt wenigstens etwa 20 Gew.-% und bevorzugt wenigstens etwa 40 Gew.-% beträgt.

18. Verwendung der Aktivatorsysteme gemäß Anspruch 1 zur Aushärtung von Reaktivklebern durch Einwirkung von Umgebungsluft insbesondere bei Umgebungstemperatur, wobei die Reaktivkleber bevorzugt auf Basis pastöser Massen aufgebaut sind, die Reaktivkomponenten auf Acrylat- und/oder Methacrylatbasis insbesondere in Abmischung mit wenigstens teilweise darin löslichen Polymeren enthalten und bevorzugt Viskositätswerte oberhalb 500 mPas, insbesondere im Bereich von etwa 3000 bis 10000 mPas aufweisen.

19. Verwendung der Aktivatorsysteme nach Ansprüchen 1 zur Aushärtung von Oberflächenbeschichtungen, die insbesondere als lufttrocknendes Lacksystem vorliegen oder zur Ausbildung von Kunststoff-Formteilen, jeweils durch Einwirkung von Umgebungsluft und insbesondere bei Umgebungstemperatur.

20. Formgebend verarbeitbare radikalisch polymerisierbare Mehrstoffgemische, die auch in Form lagerstabiler Mehrkomponentensysteme vorliegen können, enthaltend
ethylenisch ungesättigte polymerisierbare Verbindungen gewünschtenfalls in Abmischung mit löslichen und/oder unlöslichen Füll- und/oder sonstigen Hilfsstoffen sowie
ein durch Sauerstoffzutritt initiierbares Aktivatorsystem,
dadurch gekennzeichnet, daß sie in Applikationsform als wenigstens schwach angedicktes Material vorliegen und ein durch Zutritt von Umgebungsluft initiierbares Aktivatorsystem auf Basis der nachfolgenden Hauptkomponenten enthalten:
N-alkyl-substituierte tert.-Arylamine mit wenigstens einer alpha-ständigen aliphatischen CH-Bindung
im System wenigstens anteilsweise lösliche Metallverbindungen für die Trocknungsbeschleunigung ungesättigter Öle sowie
schwach saure Carbonsäuren mit pK_{S}-Werten nicht kleiner als etwa 0,9.

21. Mehrstoffgemische nach Anspruch 20, dadurch gekennzeichnet, daß sie in Applikationsform eine Mindestviskosität (Brookfield) von wenigstens etwa 100 mPas, bevorzugt von wenigstens etwa 300 mPas und insbesondere von wenigstens etwa 500 mPas aufweisen.

22. Mehrstoffgemische nach Ansprüchen 20 und 21, dadurch gekennzeichnet, daß die freie Carbonsäure des Aktivatorsystems wenigstens anteilig durch ethylenisch ungesättigte Mono- und/oder Dicarbonsäuren, insbesondere Acrylsäure, Methacrylsäure, Crotonsäure, Itaconsäure, Maleinsäure und/oder Fumarsäure ausgebildet ist.

23. Mehrstoffgemische nach Ansprüchen 21 und 22, dadurch gekennzeichnet, daß die freie Carbonsäure des Aktivatorsystems wenigstens anteilig durch COOH-Gruppen ausgebildet ist, die an vorgebildete Oligomer- und/oder Polymerverbindungen gebunden sind, die bei der Aushärtung des Mehrstoffgemisches bevorzugt in das Reaktionsprodukt eingebunden werden.

## Claims

1. The use of activator systems for the radical polymerization of olefinically unsaturated systems containing as principal components of the activator system
- N-alkyl-substituted tert.arylamines containing at least one aliphatic CH bond in the α-position
- metal compounds at least partly soluble in the system to accelerate the drying of unsaturated oils and
- mildly acidic compounds having pK_{S} values no lower than 0.9
for the time-controlled curing - with a predeterminable pot life - of mouldable mixtures containing the radical-polymerizable components, particularly together with dissolved and/or undissolved fillers and/or auxiliaries, by ambient air at least at room temperature, preferably during the moulding of the mixtures.

2. The use claimed in claims 1, characterized in that the mildly acidic compounds are monomeric and/or polymeric carboxylic acids.

3. The use claimed in claim 2, characterized in that the multicomponent mixtures of activator system and polymerizable components are formulated as multicomponent systems which are non-reactive even on contact with air, the multicomponent systems being in particular two-component systems in which the tertiary N compound is kept separate from the metal compounds and the free carboxylic acids and the components being combined for moulding and curing.

4. The use claimed in claims 1 to 3, characterized in that the activator-containing multicomponent mixtures are used with viscosities (Brookfield) of at least about 30 to 100 mPa.s and more especially of at least about 300 mPa.s for moulding.

5. The use claimed in claims 1 to 4, characterized in that compounds corresponding to general formula I: 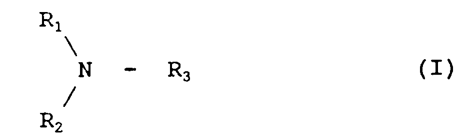 in which
R₁ is an optionally substituted aryl radical, more especially an optionally alkyl-substituted phenyl radical,
R₂ has the same meaning as R₁ or is an optionally substituted, linear or branched alkyl radical and
R₃ is a linear or branched alkyl radical which may even be substituted, but contains at least one H atom in the α-position to the N,
are used as N-alkyl-substituted arylamines in the activator system.

6. The use claimed in claims 1 to 5, characterized in that dialkyl aniline compounds substituted or unsubstituted in the aromatic ring, of which the alkyl radicals each preferably contain up to 10 and more preferably up to 6 C atoms, are present as compounds corresponding to general formula I, aniline derivatives optionally alkyl- substituted in the ring, especially those of the structure of dimethyl aniline and/or dimethyl-p-toluidine, being particularly suitable.

7. The use claimed in claims 1 to 6, characterized in that they contain compounds of metals occurring in several valency stages, more especially compounds of corresponding transition metals, the metal ions preferably being present in their low valency stage, as the metal-containing driers at leastly partly soluble in the system.

8. The use claimed in claims 1 to 7, characterized in that they contain metal compounds - soluble in organic media - of cobalt and/or manganese or even iron, the iron even being useable in the form of an Fe³⁺ compound.

9. Multicomponent mixtures as claimed in claims 1 to 8, characterized in that carboxylic acids having pK_{S} values no lower than about 1 and preferably no lower than about 1.3 are used.

10. The use claimed in claims 1 to 9, characterized in that acidic compounds having an upper PK_{S} limit of approximately 13 and preferably of approximately 11.5 and, in particular, corresponding carboxylic acids where the free carboxylic acid has an upper pK_{S} limit of approximately 7 are used.

11. The use claimed in claims 1 to 10, characterized in that carboxylic acids containing one or more carboxyl groups and more especially 1 to 4 carboxyl groups are used.

12. The use claimed in claims 1 to 11, characterized in that they may contain as ethylenically unsaturated polymerizable components acrylate and/or methacrylate compounds or systems, styrene or styrene derivatives and/or acrylonitrile-containing components which may even be completely or partly present in the form of reactive preformed oligomer and/or polymer compounds.

13. The use claimed in claims 1 to 12, characterized in that multicomponent systems including fillers, thickeners, elasticizing agents, pigments, coupling agents, stabilizers and/or other auxiliaries which are soluble and/or insoluble in the system are additionally used.

14. The use claimed in claims 1 to 13, characterized in that mixtures containing antioxidants, reducing agents and/or radical initiators are used for stabilization against unwanted contact with oxygen and/or for regulating pot life.

15. The use claimed in claims 1 to 14, characterized in that multicomponent mixtures in which the activator mixture makes up no more than about 25% by weight and preferably no more than about 10% by weight of the system as a whole and preferably makes up at least 0.1% by weight and, more preferably, about 1 to 8% by weight of the system as a whole are used and processed by moulding.

16. The use claimed in claims 1 to 15, characterized in that the components of the activator system are used in substantially the following quantitative ratios to one another (in % by weight, based on the mixture of the three constituents of the activator):
5 to 20 and preferably 5 to 15% by weight metal compound or
0.01 to 5 and preferably 0.05 to 2% by weight metal
30 to 60 and preferably 40 to 55% tert. amine compound
30 to 60 and preferably 40 to 55% of the weak acid.

17. The use claimed in claims 1 to 16, characterized in that the systems are used in which the content of radical-polymerizable components, particularly their monomer content, is at least about 20% by weight and preferably at least about 40% by weight.

18. The use of the activator systems claimed in claim 1 for the curing of reactive adhesives by contact with ambient air, particularly at ambient temperature, the reactive adhesives preferably being based on paste-like masses which contain acrylate- and/or methacrylate-based reactive components, particularly in admixture with polymers at least partly soluble therein, and preferably have viscosity values above 500 mPa.s and more especially in the range from about 3000 to 10,000 mPa.s.

19. The use of the activator systems claimed in claim 1 for the curing of surface coatings, particularly in the form of air-drying paint systems, and for the production of plastics mouldings, in either case by contact with ambient air, particularly at ambient temperature.

20. Mouldable, radical-polymerizable multicomponent mixtures, which may even be present in the form of storable multicomponent systems, containing
- ethylenically unsaturated, polymerisable compounds, if desired in admixture with soluble and/or insoluble fillers and/or other auxiliaries and
- an activator system initiatable by contact with oxygen,
characterized in that, in their in-use form, the multi-component mixtures are present as at leastly slightly thickened material and contain an activator system based on the following principal components which can be initiated by contact with ambient air:
- N-alkyl-substituted tert.-arylamines containing at least one aliphatic CH bond in the α-position
- metal compounds at least partly soluble in the system to accelerate the drying of unsaturated oils and
- mildly acidic carboxylic acids having pK_{S} values no lower than about 0.9.

21. Multicomponent mixtures as claimed in claim 20, characterized in that, in their in-use form, they have a minimum viscosity (Brookfield) of at least about 100 mPa.s, preferably of at least about 300 mPa.s and, more preferably, of at least about 500 mPa.s.

22. Multicomponent mixtures as claimed in claims 20 and 21, characterized in that the free carboxylic acid of the activator system is formed at least partly by ethylenically unsaturated mono- and/or dicarboxylic acids, more especially acrylic acid, methacrylic acid, crotonic acid, itaconic acid, maleic acid and/or fumaric acid.

23. Multicomponent mixtures as claimed in claims 21 and 22, characterized in that the free carboxylic acid of the activator system is formed at least partly by COOH groups attached to preformed oligomer and/or polymer compounds which are preferably bound into the reaction product during curing of the multicomponent mixture.

## Revendications

1. Utilisation de systèmes activateurs pour la polymérisation radiculaire de systèmes oléfiniques insaturés contenant comme principaux composants du système d'activateur,
- des tert.-arylamines N-alkylsubstituées avec au moins une liaison CH aliphatique en alpha,
- des composés métalliques au moins partiellement solubles dans le système pour accélérer le séchage d'huiles insaturées ainsi que
- des composés faiblement acides, avec des valeurs pK_{S} non inférieures à 0,9,
pour le durcissement en fonction du temps d'une vie en stockage prédéterminable au moyen de l'air ambiant au moins à température ambiante de mélanges de substances transformables par moulage qui sont réalisés en matière pouvant couler, de préférence au moins faiblement épaissie, apte pour enduits, distribuable jusqu'à l'état pâteux, et de préférence pendant la transformation qui les moule, qui contiennent les composants polymérisables radicalairement avec des charges et/ou des additifs dissous et/ou non dissous.

2. Utilisation selon la revendication 1, caractérisée en ce que les composés faiblement acides sont des acides carboxyliques monomères et/ou polymères.

3. Utilisation selon la revendication 2, caractérisée en ce que les compositions de système activateur et de composants polymérisables sont constituées comme système à plusieurs composants non réactifs au contact de l'air, comme système à plusieurs composants, on utilise notamment des systèmes à 2 composants, dans lesquels le composé tert.-N est maintenu séparé des composés métalliques et des acides carboxyliques et les composants sont réunis pour la transformation par moulage et pour le durcissement.

4. Utilisation selon les revendications 1 à 3, caractérisée en ce que les compositions contenant l'activateur sont utilisées lors de la transformation par moulage avec des viscosités (Brookfield) d'au moins environ 30 à 100 mPas, notamment d'environ 300 mPas.

5. Utilisation selon les revendications 1 à 4, caractérisée en ce que dans le système activateur, on utilise comme arylamine N-alkyl substituée des composés de formule générale (I) : 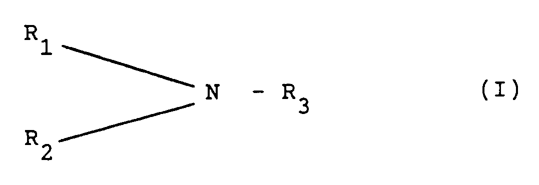 dans laquelle :
R₁ est un reste aryle substitué le cas échéant, notamment un reste phényle alkyl substitué le cas échéant,
R₂ a la signification de R₁, ou d'un reste alkyle linéaire ou ramifié substitué le cas échéant,
R₃ représente un reste alkyle linéaire ou ramifié, qui peut aussi être substitué, qui présente cependant en position alpha de N au moins un atome H.

6. Utilisation selon les revendications 1 à 5, caractérisée en ce que comme composés de formule générale (I) on utilise des composés de dialkylaniline substituée ou non sur le noyau aromatique, dont les restes alkyles présentent de préférence jusqu'à 10, notamment jusqu'à 6 atomes de C, des dérivés d'aniline alkyl substituée sur le noyau, notamment ceux de la structure de la diméthylaniline et/ou de la diméthyl-p-toluidine sont particulièrement adaptés.

7. Utilisation selon les revendications 1 à 6, caractérisée en ce qu'on utilise des composés métalliques comme siccatifs à base de métaux, au moins partiellement solubles dans le système, qui existent à plusieurs niveaux de valences, notamment des composés des métaux de transition correspondants, en préférant des ions métalliques, chaque fois à leur niveau de valence inférieur.

8. Utilisation selon les revendications 1 à 7, caractérisée en ce qu'on utilise des composés métalliques du cobalt et/ou du manganèse ou aussi du fer solubles dans les milieux organiques, on peut utiliser aussi le fer sous forme de composé Fe³⁺.

9. Utilisation selon les revendications 1 à 8, caractérisée en ce qu'on utilise des acides carboxyliques à pK_{S} non inférieurs à 1 environ, de préférence non inférieurs à 1,3 environ.

10. Utilisation selon les revendications 1 à 9, caractérisée en ce qu'on utilise des composés acides ayant une limite supérieure de pK_{S} d'environ 13, de préférence d'environ 11,5 et notamment des acides carboxyliques avec une limite supérieure de pK_{S} de l'acide carboxylique libre d'environ 7.

11. Utilisation selon les revendications 1 à 10, caractérisée en ce qu'on utilise des acides carboxyliques avec un ou plusieurs groupes carboxyle, notamment avec 1 à 4 groupes carboxyle.

12. Utilisation selon les revendications 1 à 11, caractérisée en ce qu on utilise comme composés polymérisables éthyléniques insaturés des composés ou des systèmes acrylates et/ou méthacrylates ou des composants contenant du styrène ou des dérivés de styrène et/ou de l'acrylonitrile, qui peuvent se présenter totalement ou en partie sous forme de composés oligomères et/ou polymères réactifs préformés.

13. Utilisation selon les revendications 1 à 12, caractérisée en ce qu'en plus dans le système, on utilise des charges solubles et/ou insolubles, des épaississants, des plastifiants, des pigments, des agents d'adhérence, des stabilisants, et/ou des compositions contenant d'autres additifs.

14. Utilisation selon les revendications 1 à 13, caractérisée en ce que pour stabiliser vis-à-vis du contact intempestif avec l'oxygène et/ou pour ajuster la vie en stockage on utilise des compositions contenant des antioxydants, des réducteurs et/ou des inhibiteurs de radicaux.

15. Utilisation selon les revendications 1 à 14, caractérisée en ce qu on utilise des compositions et qu'on les transforme par moulage, dans lesquelles le mélange activateur ne représente pas plus d'environ 25 % en poids, de préférence pas plus d'environ 10 % du système total, qu'il représente de préférence au moins 0,1 % en poids et notamment environ 1 à 8 % en poids du système total.

16. Utilisation selon les revendications 1 à 15, caractérisée en ce que les composants du système activateur sont utilisés dans les proportions quantitatives suivantes l'un par rapport à l'autre - en % en poids rapporté au mélange des trois composants d'activateur :
- 5 à 20, de préférence 5 à 15 % de composé métallique ou,
- 0,01 à 5 de préférence 0,05 à 2 % en poids de métal,
- 30 à 60, de préférence 40 à 55 % de composé amine tertiaire,
- 30 à 60, de préférence 40 à 55 % d'acide faible.

17. Utilisation selon les revendications 1 à 16, caractérisée en ce qu on met en oeuvre des systèmes dont la teneur en composés polymérisables radicalairement, notamment leur teneur en monomère est au moins d'environ 20 % en poids, et de préférence au moins d'environ 40 % en poids.

18. Utilisation de systèmes activateurs selon la revendication 1 pour durcir des adhésifs réactifs par action de l'air environnant notamment à température ambiante, les adhésifs réactifs étant constitués de préférence à base de masses pâteuses, les composants réactifs à base d'acrylate et/ou de méthacrylate contiennent en mélange notamment des polymères qui y sont au moins partiellement solubles et présentent des viscosités supérieures de préférence à 500 mPas, notamment dans l'intervalle d'environ 3000 à 10000 mPas.

19. Utilisation de systèmes activateurs selon la revendication 1 pour durcir des revêtements de surface, qui se présentent notamment sous forme de système de laque séchant à l'air ou pour former des pièces moulées en matières plastiques, chaque fois sous l'effet de l'air environnant et notamment à température ambiante.

20. Compositions radicalairement polymérisables transformables par moulage qui peuvent se présenter sous forme de système à plusieurs substances, contenant :
- des composés éthyléniquement insaturés polymérisables le cas échéant en mélange avec des charges et/ou autres additifs solubles et/ou insolubles ainsi que
- un système d'activateur initiable par le contact de l'oxygène,
caractérisées en ce qu'elles existent dans les formes d'application sous forme de matériau au moins légèrement épaissi et qu'elles contiennent un système d'activateur initialisable sous l'effet de l'air environnant à base des composants principaux suivants :
- tert-.arylamines N-alkylsubstituées avec au moins une liaison CH aliphatique en alpha,
- des composés métalliques au moins partiellement solubles dans le système pour accélérer le séchage d'huiles insaturées ainsi que
- des acides carboxyliques faiblement acides avec des valeurs pK_{S} non inférieures à environ 0,9.

21. Compositions selon la revendication 20, caractérisées en ce qu'elles présentent sous forme d'application une viscosité minimale (Brookfiel) d'au moins environ 100 mPas, de préférence d'au moins environ 300 mPas et notamment d'au moins environ 500 mPas.

22. Compositions selon les revendications 20 et 21, caractérisées en ce que l'acide carboxylique libre du système activateur est constitué au moins en partie d'acides mono et/ou dicarboxyliques éthyléniques insaturés, notamment d'acide acrylique, acide métacrylique, acide crotonique, acide itaconique, acide maléïque et/ou acide fumarique.

23. Compositions selon les revendications 21 et 22, caractérisées en ce que l'acide carboxylique libre du système activateur est constitué au moins en partie de groupes COOH, qui sont liés à des composés oligomères et/ou polymères préformés qui lors du durcissement de la composition sont incorporés de préférence dans le produit de réaction.
